(19) Europäisches Patentamt / European Patent Office / Office européen des brevets

(11) **EP 3 840 163 B1**

(12) **FASCICULE DE BREVET EUROPEEN**

(45) Date de publication et mention de la délivrance du brevet:
**13.07.2022 Bulletin 2022/28**

(21) Numéro de dépôt: **20213783.2**

(22) Date de dépôt: **14.12.2020**

(51) Classification Internationale des Brevets (IPC):
*H02J 3/38* (2006.01)     *H02J 3/46* (2006.01)
*H02J 3/00* (2006.01)

(52) Classification Coopérative des Brevets (CPC):
**H02J 3/472; H02J 3/003; H02J 3/381; H02J 3/466;**
H02J 2300/10; Y04S 10/50

(54) **PROCÉDÉ DE DÉTERMINATION D'UNE SÉQUENCE DE FONCTIONNEMENT D'UN ENSEMBLE DE GROUPES ÉLECTROGÈNES D'UN RÉSEAU ÉLECTRIQUE**

VERFAHREN ZUR BESTIMMUNG DER BETRIEBSSEQUENZ VON DEN GENERATOREN EINES VERSORGUNGSNETZES

METHOD FOR DETERMINING THE OPERATING SEQUENCE OF MULTIPLE GENERATORS OF A POWER NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2019 FR 1915107**

(43) Date de publication de la demande:
**23.06.2021 Bulletin 2021/25**

(73) Titulaire: **Commissariat à l'Energie Atomique et aux Energies Alternatives**
**75015 Paris (FR)**

(72) Inventeurs:
• **HA, Duy Long**
  **38054 GRENOBLE CEDEX 09 (FR)**
• **PICHENOT, Grégoire**
  **38054 GRENOBLE CEDEX 09 (FR)**

(74) Mandataire: **Cabinet Camus Lebkiri**
**25 rue de Maubeuge**
**75009 Paris (FR)**

(56) Documents cités:
**WO-A1-2016/102675     JP-A- S62 131 725**
**JP-A- 2009 189 226     JP-A- 2010 035 321**

**Description**

**DOMAINE TECHNIQUE DE L'INVENTION**

Le domaine technique de l'invention est celui des réseaux électriques et plus particulièrement celui de la gestion du fonctionnement des groupes électrogènes d'un réseau électrique.

La présente invention concerne un procédé de détermination d'une séquence de fonctionnement d'au moins un ensemble de groupes électrogènes d'un réseau électrique. La présente invention concerne également un procédé de mise en œuvre de la séquence de fonctionnement par le réseau électrique.

**ARRIERE-PLAN TECHNOLOGIQUE DE L'INVENTION**

Pour adapter la fourniture d'énergie par un réseau électrique à la demande en énergie sur le réseau électrique et être en capacité de fournir l'énergie nécessaire en évitant ou limitant les déséquilibres, les fournisseurs d'énergie planifient à l'avance l'état allumé/éteint dans lequel doit se trouver chaque groupe électrogène du réseau électrique à chaque intervalle de temps d'une période donnée, ainsi que la puissance affectée à un groupe électrogène allumé à un intervalle de temps donné.

Pour que cette planification soit optimale, notamment en termes d'usure du parc de groupes électrogènes, d'émissions de gaz à effet de serre et de consommation de carburant, il faut déterminer les variables d'états et de puissances des groupes électrogènes à chaque intervalle de temps, à la fois en minimisant le nombre d'allumages des groupes électrogènes et en maximisant le rendement de chaque groupe électrogène allumé.

Pour cela, il est connu d'utiliser une méthode d'optimisation par programmation linéaire mixte ou par programmation dynamique. Cependant, ces méthodes d'optimisation ne fonctionnent que pour des micro-réseaux électriques ayant seulement quelques groupes électrogènes. Par exemple, l'approche par programmation dynamique ne peut pas fournir cette planification pour un réseau électrique ayant plus de 4 groupes électrogènes avec un processeur de 2.3 GHz et 8G de mémoire RAM.

Il existe donc un besoin d'obtenir une planification optimale, notamment en termes de consommation de carburant, d'usure du parc de groupes électrogènes et d'émissions de gaz à effet de serre, du fonctionnement des groupes électrogènes d'un réseau électrique pouvant comporter plus de quatre groupes électrogènes.

Les documents JP 2010 035321 A, JP S62 131725 A, JP 2009 189226 A et WO 2016/102675 A1 divulguent des exemples de procédés de détermination d'une séquence de fonctionnement d'un ensemble de groupes électrogènes d'un réseau électrique avec l'affectation d'un rang à chaque groupe électrogène.

**RESUME DE L'INVENTION**

L'invention offre une solution aux problèmes évoqués précédemment, en permettant de déterminer, à chaque intervalle de temps d'une période donnée, l'état et la puissance de fonctionnement de chaque groupe électrogène d'un réseau électrique comportant plus de quelques groupes électrogènes, notamment pour optimiser la consommation de carburant par les groupes électrogènes, l'usure des groupes électrogènes et l'émission de gaz à effet de serre.

Un premier aspect de l'invention concerne un procédé mis en œuvre par ordinateur, de détermination d'une séquence de fonctionnement d'au moins un ensemble de groupes électrogènes d'un réseau électrique, les groupes électrogènes de l'ensemble étant identiques, la séquence de fonctionnement attribuant pour chaque intervalle de temps d'une période donnée, un état éteint ou un état allumé à chaque groupe électrogène et attribuant une puissance de fonctionnement comprise entre une puissance minimale du groupe électrogène et une puissance maximale du groupe électrogène à chaque groupe électrogène auquel est attribué l'état allumé pour l'intervalle de temps, le procédé comportant les étapes suivantes :

- Affecter un rang à chaque groupe électrogène ;
- A partir d'une courbe de charge prévisionnelle, déterminer un nombre minimal de groupes électrogènes destinés à se voir attribuer l'état allumé sur la période donnée ;
- Pour chaque groupe électrogène ayant un rang inférieur ou égal au nombre minimal de groupes électrogènes, attribuer dans la séquence de fonctionnement l'état allumé au groupe électrogène pour chaque intervalle de temps ;
- Pour chaque groupe électrogène ayant un rang supérieur au nombre minimal de groupes électrogènes $N_{min}$, attribuer, par rang croissant, pour chaque intervalle de temps de la séquence de fonctionnement l'état allumé ou l'état éteint au groupe électrogène, et pour chaque groupe électrogène auquel est affecté l'état allumé à un intervalle de temps donné de la séquence de fonctionnement, attribuer une puissance de fonctionnement, par optimisation d'une fonction de coût sur la période avec une contrainte selon laquelle le nombre d'intervalles de temps sur l'ensemble de la période pour lesquels l'état allumé est attribué au générateur est supérieur ou égal au nombre d'intervalles de temps sur l'ensemble de la période pour lesquels l'état allumé est attribué à chaque groupe électrogène ayant un rang supérieur au générateur.

Grâce à l'invention, la complexité du problème pour les états des groupes électrogènes, égale à $2^{txn}$ avec t le nombre d'intervalles de temps dans la période donnée et n le nombre de groupes électrogènes du réseau électrique, est considérablement diminuée. En effet, d'une part l'affectation d'un rang à chaque groupe électrogène et la contrainte permettent de casser la symétrie du problème en diminuant le nombre de possibilités pour chaque groupe électrogène à mesure que le rang augmente et d'autre part, le calcul d'un nombre minimal de groupes électrogènes permet de diminuer le nombre de calculs pour un certain nombre de groupes électrogènes allumés sur toute la période. Le calcul des états et des puissances des groupes électrogènes à partir de la fonction de coût permet de s'assurer de l'optimalité de la solution. Cette diminution permet d'obtenir une séquence de fonctionnement pour des réseaux électriques possédant une quinzaine de groupes électrogènes pour un intervalle de temps de 1 minute sur une période de 24h, pour des réseaux électriques possédant plus d'une centaine de groupes électrogènes pour un intervalle de temps de 10 minutes sur une période de 24h et pour des réseaux électriques possédant plus de 300 groupes électrogènes pour un intervalle de temps de 30 minutes sur une période de 24h.

Outre les caractéristiques qui viennent d'être évoquées dans le paragraphe précédent, le procédé selon un premier aspect de l'invention peut présenter une ou plusieurs caractéristiques complémentaires parmi les suivantes, considérées individuellement ou selon toutes les combinaisons techniquement possibles.

Selon une variante de réalisation, le rang d'un groupe électrogène dépend de son nombre d'heures de fonctionnement et/ou de sa disponibilité.

Ainsi, il est possible d'affecter le rang pour homogénéiser l'usure du parc de groupes électrogènes ou pour prendre en compte l'indisponibilité, par exemple pour maintenance, d'un groupe électrogène.

Selon un premier mode de réalisation compatible avec la variante de réalisation précédente, le nombre minimal $N_{min}$ de groupes électrogènes vaut :

$$N_{min} = \left\lfloor \frac{\alpha.P^c_{min} + \beta.P^c_{moy}}{P^g_{ref}} \right\rfloor$$

Avec : $P^c_{min}$ la puissance minimale de la courbe de charge prévisionnelle, $P^c_{moy}$ la puissance moyenne de la courbe de charge prévisionnelle, $P^g_{ref}$ une puissance de référence du groupe électrogène, $\alpha$ et $\beta$ des coefficients compris entre 0 et 1 tels que la somme de $\alpha$ et $\beta$ valle 1 et $\lfloor . \rfloor$ la partie entière.

Ainsi, il est possible de calculer le nombre minimal de groupes électrogènes pour des courbes de charge prévisionnelles ayant des profils variés.

Selon un deuxième mode de réalisation compatible avec la variante de réalisation précédente, le nombre minimal Nmin de groupes électrogènes vaut :

$$N_{min} = \left\lfloor \frac{P^c_{min}}{P^g_{ref}} + 1 \right\rfloor$$

Avec: $P^c_{min}$ la puissance minimale de la courbe de charge prévisionnelle, $P^g_{ref}$ une puissance de référence du groupe électrogène et $\lfloor . \rfloor$ la partie entière.

Ainsi, il est possible de calculer le nombre minimal de groupes électrogènes pour des courbes de charge prévisionnelles ayant un profil relativement plat, avec moins de calculs par rapport au premier mode de réalisation, puisqu'il n'est pas nécessaire d'estimer $\alpha$ et $\beta$.

Selon une variante de réalisation compatible avec les modes de réalisation précédents, la puissance de référence $P^g_{ref}$ du groupe électrogène est égale à la puissance maximale $P^g_{max}$ du groupe électrogène ou à une puissance optimale $P^g_{opt}$ du groupe électrogène.

Selon une variante de réalisation compatible avec les modes et variantes de réalisation précédents, la fonction de coût comprend la somme, pour chaque groupe électrogène, d'un coût d'allumage des groupes électrogènes et d'un coût de fonctionnement des groupes électrogènes sur la période.

Ainsi, la fonction de coût permet de minimiser l'usure, la consommation de carburant et les émissions de gaz à effet de serre des groupes électrogènes.

Selon une sous-variante de réalisation des variantes de réalisation précédentes, le coût de fonctionnement d'un groupe électrogène dépend d'une courbe de rendement du groupe électrogène donnant le rendement du groupe électrogène en fonction de sa puissance de fonctionnement, la puissance optimale $P_{opt}^g$ du groupe électrogène correspondant au maximum de la courbe de rendement.

Ainsi, la fonction de coût prend en compte le rendement des groupes électrogènes allumés pour minimiser les émissions de gaz à effet de serre et la consommation de carburant.

Selon une variante de réalisation compatible avec les modes et variantes de réalisation précédents, le réseau électrique comporte plusieurs ensembles de groupes électrogènes identiques, le procédé comportant une étape préalable d'ordonnancement des ensembles de groupes électrogènes par puissance maximale des groupes électrogènes de l'ensemble décroissante, les étapes du procédé étant réalisées pour chaque ensemble par ordre croissant, la courbe de charge prévisionnelle pour l'ensemble prenant en compte la consommation d'énergie sur le réseau électrique et l'énergie fournie par chaque ensemble ayant un ordre inférieur à l'ensemble.

Ainsi, il est possible de diminuer encore la complexité du problème en ordonnant les ensembles de groupes électrogènes.

Selon une sous-variante de réalisation de la variante de réalisation précédente, la courbe de charge prévisionnelle prend en compte en outre l'énergie produite par des sources d'énergie autres que les groupes électrogènes dans le réseau électrique.

Ainsi, la courbe de charge prévisionnelle peut prendre en compte d'autres sources d'énergie du réseau.

Selon une alternative de réalisation de la sous-variante de réalisation précédente, les autres sources d'énergie sont au moins un dispositif photovoltaïque et/ou au moins un dispositif éolien et/ou au moins une batterie.

Un deuxième aspect de l'invention concerne un procédé de mise œuvre sur le réseau électrique, de la séquence de fonctionnement déterminée par le procédé selon le premier aspect de l'invention lors de la période, comportant les étapes suivantes :

- A chaque intervalle de temps :

  ◦ Allumer chaque groupe électrogène éteint auquel est attribué l'état allumé dans la séquence de fonctionnement à l'intervalle de temps ;
  ◦ Eteindre chaque groupe électrogène allumé auquel est attribué l'état éteint dans la séquence de fonctionnement à l'intervalle de temps si le groupe électrogène est allumé ;
  ◦ Placer à la puissance de fonctionnement correspondante, chaque groupe électrogène auquel est attribué l'état allumé dans la séquence de fonctionnement à l'intervalle de temps.

Un troisième aspect de l'invention concerne un produit-programme d'ordinateur comprenant des instructions qui, lorsque le programme est exécuté par un ordinateur, conduisent celui-ci à mettre en œuvre les étapes du procédé selon le premier aspect de l'invention.

Un quatrième aspect de l'invention concerne un support d'enregistrement lisible par ordinateur comprenant des instructions qui, lorsqu'elles sont exécutées par un ordinateur, conduisent celui-ci à mettre en œuvre les étapes du procédé selon le premier aspect de l'invention.

L'invention et ses différentes applications seront mieux comprises à la lecture de la description qui suit et à l'examen des figures qui l'accompagnent.

## BREVE DESCRIPTION DES FIGURES

Les figures sont présentées à titre indicatif et nullement limitatif de l'invention.

- La figure 1 est un schéma synoptique représentant les étapes du procédé selon le premier aspect de l'invention.
- La figure 2 montre une représentation schématique d'un réseau électrique.
- La figure 3 montre une courbe de charge prévisionnelle représentant la puissance à fournir en fonction du temps sur une période donnée.
- La figure 4 montre une courbe de rendement d'un groupe électrogène représentant le rendement du groupe électrogène en fonction de sa puissance de fonctionnement.

- La figure 5 illustre plusieurs scénarios pour la séquence de fonctionnement des groupes électrogènes d'un réseau électrique pour un intervalle de temps donné.
- La figure 6 est un schéma synoptique représentant les étapes du procédé selon le deuxième aspect de l'invention.

## DESCRIPTION DETAILLEE

Sauf précision contraire, un même élément apparaissant sur des figures différentes présente une référence unique.

Un premier aspect de l'invention concerne un procédé de détermination d'une séquence de fonctionnement d'au moins un ensemble de groupes électrogènes d'un réseau électrique. Les groupes électrogènes sont identiques au sein d'un ensemble.

On entend par « réseau électrique », un ensemble d'infrastructures permettant d'acheminer de l'énergie électrique produite par des sources d'énergie vers des consommateurs d'énergie électrique.

Dans la suite de la description, on utilisera indifféremment les termes « réseau électrique » et « réseau ».

La séquence de fonctionnement est déterminée de manière à fournir aux consommateurs d'énergie du réseau, l'énergie électrique consommée tout en la produisant de la façon la plus efficace possible.

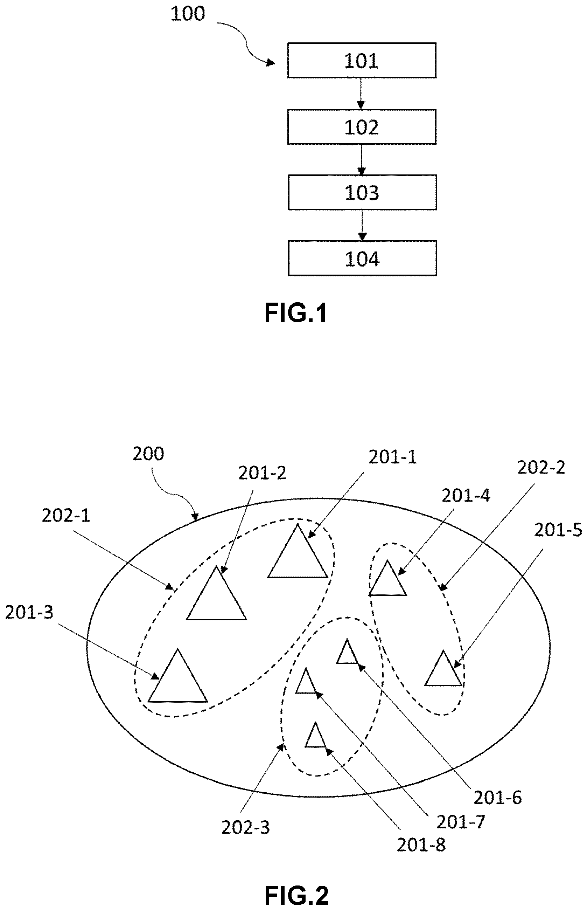

[Fig. 2] La figure 2 montre une représentation schématique d'un réseau électrique 200.

Le réseau électrique 200 comporte une pluralité de groupes électrogènes 201.

On entend par « groupe électrogène », un dispositif autonome capable de produire de l'énergie électrique à partir d'énergie thermique fournie par un moteur thermique alimenté en carburant. Un groupe électrogène 201 émet donc des gaz à effet de serre, et en particulier du $CO_2$, pour produire de l'énergie électrique, et consomme du carburant. Un groupe électrogène nécessite également des maintenances, dont la survenue est par exemple influencée par le nombre de ses démarrages et par ses heures de fonctionnement.

Un objectif de l'invention est de fournir les consommateurs du réseau électrique 200 en énergie, tout en minimisant les consommations de carburant, les émissions de gaz à effet de serre et les besoins de maintenance des groupes électrogènes 201.

Un groupe électrogène 201 dans le réseau électrique 200 peut se trouver dans deux états, soit un état éteint dans lequel le groupe électrogène 201 ne fournit pas d'énergie électrique au réseau 200, ou dans un état allumé dans lequel le groupe électrogène 201 fournit de l'énergie électrique au réseau 200 à une puissance donnée, appelée puissance de fonctionnement Pf.

Chaque allumage d'un groupe électrogène 201 augmente son usure et donc son besoin de maintenance. Ainsi pour minimiser l'usure d'un groupe électrogène, il faut minimiser le nombre d'allumages du groupe électrogène 201.

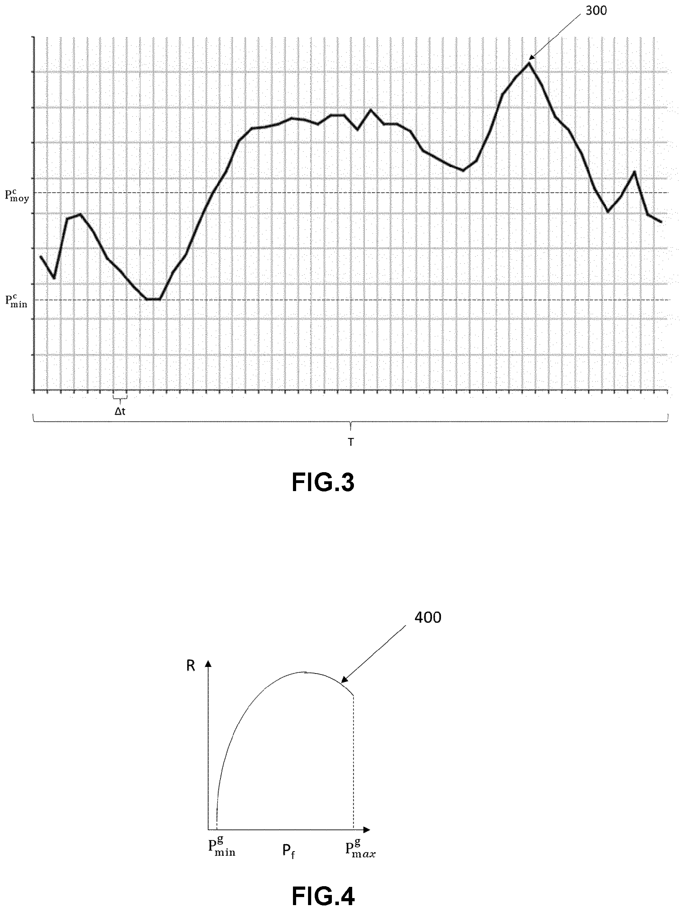

[Fig. 4] La figure 4 montre une courbe de rendement 400 d'un groupe électrogène 201, c'est-à-dire le rendement du groupe électrogène 201 en fonction de sa puissance de fonctionnement Pf.

On définit le rendement d'un groupe électrogène 201 comme le rapport entre l'énergie électrique produite par le groupe électrogène 201 et l'énergie thermique fournie au groupe électrogène 201.

La puissance de fonctionnement Pf est comprise entre une puissance minimale $P_{min}^{g}$ du groupe électrogène 201 et une puissance maximale $P_{max}^{g}$ du groupe électrogène 201.

Sur la figure 4, on constate que le rendement du groupe électrogène 201 augmente jusqu'à atteindre un maximum à une puissance optimale $P_{opt}^{g}$ du groupe électrogène 201, correspondant à environ 85% de la puissance maximale $P_{max}^{g}$ du groupe électrogène 201, puis diminue.

Ainsi, pour minimiser l'énergie thermique à fournir au groupe électrogène 201 et donc sa consommation de carburant et ses émissions de gaz à effet de serre, il faut maximiser le rendement du groupe électrogène 201 en choisissant une puissance de fonctionnement Pf proche de la puissance optimale $P_{opt}^{g}$ du groupe électrogène 201.

Au sein d'un réseau 200, les groupes électrogènes 201 peuvent être identiques, ce qui entraîne d'avoir une même courbe de rendement 400, c'est-à-dire les mêmes puissances minimale $P_{min}^{g}$, maximale $P_{max}^{g}$ et optimale , ou différents comme représenté sur la figure 2. Les groupes électrogènes 201 identiques sont réunis au sein d'un ensemble 202 de groupes électrogènes 201.

Sur la figure 2, le réseau électrique 200 comporte trois ensembles 202. Un premier ensemble 202-1 comporte trois groupes électrogènes 201-1, 201-2, 201-3, un deuxième ensemble 202-2 comporte deux groupes électrogènes 201-4, 201-5 et un troisième ensemble 202-3 comporte trois groupes électrogènes 201-6, 201-7, 201-8.

Sur la figure 2, plus le symbole représentant un groupe électrogène 201 est gros, plus le groupe électrogène 201 correspondant fonctionne avec des puissances élevées. Ainsi, les groupes électrogènes 201 du premier ensemble 202-1 fonctionnent avec des puissances plus élevées que les groupes électrogènes 201 du deuxième ensemble 202-2 et les groupes électrogènes 201 du deuxième ensemble 202-2 fonctionnent avec des puissances plus élevées que les groupes électrogènes 201 du troisième ensemble 202-3.

Le réseau électrique 200 peut comporter d'autres sources d'énergie électrique que les groupes électrogènes 201, par exemple au moins un dispositif photovoltaïque configuré pour fournir de l'énergie électrique au réseau 200 à partir d'énergie fournie par le Soleil et/ou au moins un dispositif éolien configuré pour fournir de l'énergie électrique au réseau 200 à partir d'énergie fournie par le vent et/ou au moins une batterie configurée pour fournir de l'énergie électrique stockée au réseau 200. L'énergie électrique stockée dans la batterie a par exemple été stockée quand l'énergie électrique fournie par le réseau 200 excédait l'énergie électrique consommée.

On entend par « détermination d'une séquence de fonctionnement des groupes électrogènes d'un réseau électrique », la détermination pour chaque intervalle de temps d'une période donnée, de l'état allumé ou éteint de chaque groupe électrogène 201 du réseau 200 pendant l'intervalle de temps donné et de la puissance de fonctionnement $P_f$ dans le cas où un groupe électrogène 201 est affecté à l'état allumé pour l'intervalle de temps donné.

La séquence de fonctionnement est déterminée via le procédé selon le premier aspect de l'invention pour minimiser l'usure des groupes électrogènes 201 et donc leur besoin de maintenance, les émissions de gaz à effet de serre et la consommation de carburant, c'est-à-dire pour minimiser le nombre d'allumages de groupes électrogènes 201 et maximiser le rendement de chaque groupe électrogène 201 allumé.

[Fig. 1] La figure 1 est un schéma synoptique représentant les étapes 101 à 104 du procédé 100 selon le premier aspect de l'invention.

Une première étape 101 du procédé 100 consiste à affecter un rang à chaque groupe électrogène 201 d'un ensemble 202, c'est-à-dire à ordonner les groupes électrogènes 201 de l'ensemble 202 entre eux.

Dans la suite du procédé 100, plus le rang d'un groupe électrogène 201 est bas, plus il a de chance d'être dans un état allumé sur la période de la séquence de fonctionnement.

L'affectation d'un rang à un groupe électrogène 201 donné peut être aléatoire ou dépendre d'au moins un paramètre, par exemple du nombre d'heures de fonctionnement du groupe électrogène 201 et/ou encore de sa disponibilité. Ainsi, si un groupe électrogène 201 est en maintenance ou que son taux d'usure est beaucoup plus élevé que celui des autres groupes électrogènes 201 du réseau 200, un rang plus élevé lui sera affecté pour qu'il ait moins de chance de se voir attribuer l'état allumé.

Une deuxième étape 102 du procédé 100 consiste à déterminer un nombre minimal $N_{min}$ de groupes électrogènes 201 de l'ensemble 202 destinés à être dans l'état allumé sur toute la période donnée, c'est-à-dire à être allumés pendant le premier intervalle de temps de la période donnée et à ne pas être éteints pendant le reste de la période donnée.

Le nombre minimal $N_{min}$ de groupes électrogènes 201 est déterminée à partir d'une courbe de charge.

On entend par « courbe de charge », la courbe représentant la puissance électrique que le réseau 200 doit fournir aux consommateurs du réseau 200 sur la période donnée.

Dans le cas où les groupes électrogènes constituent la seule source d'énergie du réseau électrique 200, la courbe de charge correspond à la puissance électrique consommée.

Dans le cas où le réseau 200 comporte d'autres sources d'énergie, la courbe de charge correspond à la différence entre la puissance électrique consommée et la puissance fournie par les autres sources d'énergie.

La période donnée étant à venir dans le contexte de l'invention, la courbe de charge est qualifiée de prévisionnelle. La courbe de charge prévisionnelle est par exemple estimée sur la base de la courbe de charge d'une période précédant la période donnée.

[Fig. 3] La figure 3 montre une courbe de charge prévisionnelle 300 sur une période T divisée en intervalles de temps $\Delta t$ identiques.

La période T est par exemple de 24 heures ou de 48 heures et l'intervalle de temps $\Delta t$ est par exemple d'une minute, de 10 minutes ou de 30 minutes.

Dans les méthodes de l'état de l'art, dans le cas où la période T est de 24 heures et l'intervalle de temps $\Delta t$ de 10 minutes, le nombre d'intervalles de temps $\Delta t$ vaut 144 et la séquence de fonctionnement comporte $2^{144 \times n}$ états possibles de groupes électrogènes 201, avec n le nombre de groupes électrogènes 201 du réseau 200. Ainsi, dans le cas d'un réseau 200 comportant 14 groupes électrogènes, la séquence de fonctionnement comporte $2^{2016}$ états possibles de groupes électrogènes 201.

La courbe de charge prévisionnelle 300 comporte une puissance minimale $P_{min}^c$ et une puissance moyenne $P_{moy}^c$ sur la période T.

Avant le premier intervalle de temps $\Delta t$ de la période T, les groupes électrogènes 201 sont éteints.

Le nombre minimal $N_{min}$ de groupes électrogènes 201 est typiquement choisi tel que :

$$\left\lfloor \frac{P^c_{min}}{P^g_{max}} \right\rfloor + 1 \ \le N_{min} \le \ \left\lfloor \frac{P^c_{max}}{P^g_{min}} \right\rfloor$$

Avec :

- $P^c_{min}$ la puissance minimale de la courbe de charge prévisionnelle 300 ;

- $P^c_{max}$ la puissance maximale de la courbe de charge prévisionnelle 300 ;

- $P^g_{min}$ la puissance minimale du groupe électrogène 201 ;

- $P^g_{max}$ la puissance maximale du groupe électrogène 201 ;

- $\lfloor . \rfloor$ la partie entière.

Selon un premier mode de réalisation, le nombre minimal $N_{min}$ de groupes électrogènes 201 qu'il faut allumer vaut :

$$N_{min} = \left\lfloor \frac{\alpha . P^c_{min} + \beta . P^c_{moy}}{P^g_{ref}} \right\rfloor$$

Avec :

- $P^c_{min}$ la puissance minimale de la courbe de charge prévisionnelle 300 ;

- $P^c_{moy}$ la puissance moyenne de la courbe de charge prévisionnelle 300 ;

- $P^g_{ref}$ une puissance de référence du groupe électrogène 201 ;
- $\alpha$ et $\beta$ des coefficients compris entre 0 et 1, préférentiellement tels que la somme de $\alpha$ et $\beta$ valle 1 ;
- $\lfloor . \rfloor$ la partie entière.

$\alpha$ est par exemple compris dans l'intervalle [0.7, 0.9] et $\beta$ dans l'intervalle [0.1, 0.3]. $\alpha$ vaut par exemple 0.9 et $\beta$ vaut par exemple 0.1.
Selon un deuxième mode de réalisation, le nombre minimal $N_{min}$ de groupes électrogènes 201 qu'il faut allumer vaut :

$$N_{min} = \left\lfloor \frac{P^c_{min}}{P^g_{ref}} + 1 \right\rfloor$$

Avec :

- $P^c_{min}$ la puissance minimale de la courbe de charge prévisionnelle 300 ;

- $P^g_{ref}$ la puissance de référence du groupe électrogène 201 ;
- $\lfloor . \rfloor$ la partie entière.

La puissance de référence $P^g_{ref}$ du groupe électrogène 201 est par exemple égale à la puissance maximale $P^g_{max}$ du groupe électrogène 201 ou à la puissance optimale $P^g_{opt}$ du groupe électrogène 201.
Une fois le nombre minimal $N_{min}$ de groupes électrogènes 201 calculé, une troisième étape 103 du procédé 100 consiste à attribuer l'état allumé aux groupes électrogènes 201 ayant un rang inférieur ou égal au nombre minimal

$N_{min}$ de groupes électrogènes 201 pour tous les intervalles de temps $\Delta t$ de la période T.

Dans le cas où la période T est de 24 heures et l'intervalle de temps $\Delta t$ de 10 minutes, le nombre d'intervalles de temps $\Delta t$ vaut 144 et la troisième étape 103 permet de fixer $2^{144 \times N_{min}}$ états de groupes électrogènes 201. Ainsi, en référence aux méthodes de l'état de l'art, dans le cas d'un réseau 200 comportant 14 groupes électrogènes, il reste à déterminer $2^{2016} - 2^{144 \times N_{min}}$ états de groupes électrogènes 201.

Une quatrième étape 104 du procédé 100 consiste à compléter la séquence de fonctionnement, c'est-à-dire à attribuer à chaque groupe électrogène 201 de l'ensemble 202 auquel aucun état allumé ou éteint n'a été attribué dans la séquence de fonctionnement, l'état allumé ou l'état éteint pour chaque intervalle de temps $\Delta t$ de la séquence de fonctionnement et à attribuer une puissance de fonctionnement Pf à chaque groupe électrogène 201 de l'ensemble 202 auquel est attribué l'état allumé à un intervalle de temps $\Delta t$ donné.

Comme lors de la troisième étape 103 du procédé 100, l'état allumé a été attribué pour chaque intervalle de temps $\Delta t$ de la séquence de fonctionnement à chaque groupe électrogène 201 de l'ensemble 202 ayant un rang inférieur ou égal au nombre minimal $N_{min}$ de groupes électrogènes 201, seuls les groupes électrogènes 201 de l'ensemble 202 ayant un rang supérieur au nombre minimal de groupes électrogènes $N_{min}$ vont se voir attribuer un état allumé ou éteint lors de la quatrième étape 104 du procédé 100.

La quatrième étape 104 du procédé 100 est réalisée par optimisation d'une fonction de coût sur l'ensemble de la période T.

L'optimisation de la fonction de coût est réalisée de manière globale sur la période T et non pas de manière itérative par intervalle de temps $\Delta t$, c'est-à-dire que pour un groupe électrogène 201 donné, la quatrième étape 104 du procédé 100 permet d'attribuer simultanément pour l'ensemble de la période T et pour chaque intervalle de temps $\Delta t$, un état allumé ou éteint et/ou une puissance de fonctionnement Pf quand l'état allumé est attribué, pour tous les intervalles de temps $\Delta t$ de la séquence de fonctionnement.

La fonction de coût comprend par exemple la somme, pour chaque groupe électrogène 201, d'un coût d'allumage des groupes électrogènes 201 et d'un coût de fonctionnement des groupes électrogènes 201 sur l'ensemble de la période donnée T.

La fonction de coût peut alors s'écrire comme :

$$F = \sum_{\Delta t} F_f(\Delta t) + F_{on/off}(\Delta t)$$

Avec :

- F la fonction de coût ;
- Ff une fonction de coût de fonctionnement ;
- $F_{on/off}$ une fonction de coût d'allumage.

Le coût de fonctionnement d'un groupe électrogène 201 dépend par exemple de la courbe de rendement 400 du groupe électrogène 201.

La fonction de coût de fonctionnement s'exprime par exemple comme :

$$F_f(\Delta t) = \sum_{g, \Delta t} Fuel_g \times eff_g \times P_{f,g}(\Delta t)$$

Avec :

- $Fuel_g$ le coût de carburant pour le groupe électrogène 201 de rang g ;
- $eff_g$ le rendement du groupe électrogène 201 de rang g;
- $P_{f,g}$ la puissance de fonctionnement du groupe électrogène 201 de rang g.

Le coût d'allumage d'un groupe électrogène 201 s'exprime par exemple en heures de fonctionnement. Le démarrage d'un groupe électrogène 201 correspond par exemple à 5 heures de fonctionnement et un remplacement de pièces est par exemple obligatoire au bout de 1000 heures de fonctionnement.

La fonction de coût pourrait également comprendre un coût de stockage d'énergie sur des batteries qui dépend du choix des puissances de fonctionnement Pf des groupes électrogènes 201.

Un exemple de fonction de coût est donné dans la publication « Tight and Compact MILP Formulation of Start-Up and Shut-Down Ramping in Unit Commitment », par Morales-Espana, German, Jesus M. Latorre, et Andres Ramos, IEEE Transactions on Power Systems 28, n° 2 (mai 2013): 1288-96.

L'optimisation de la fonction de coût peut être formalisée sous forme de programmation linéaire mixte et ensuite résolue par une procédure de séparation et d'évaluation. Cette procédure va créer un arbre de recherche qui présente l'espace de toutes les solutions possibles. En dehors du cadre de l'invention, l'arbre de recherche serait exponentiel par rapport aux variables binaires qui sont issues des démarrages des groupes électrogènes 201, et donc le temps de résolution serait très long du fait du nombre de variables. Dans le cadre de l'invention cependant, le nombre minimal $N_{min}$ de groupes électrogènes auquel est affecté l'état allumé sur l'ensemble de la séquence de fonctionnement permet de réduire l'espace de recherche. De plus, en réalisant l'optimisation par rang croissant, l'ordre de démarrage des groupes électrogènes 201 au sein d'un ensemble 202 est défini, et on peut donc introduire une contrainte supplémentaire dans la formulation du problème d'optimisation.

$OnOff_g(\Delta t)$ est la variable binaire qui permet de définir l'état allumé ou éteint d'un groupe électrogène 201 à l'intervalle de temps $\Delta t$. g est le rang du groupe électrogène 201 et appartient à l'ensemble [1,n], avec n le nombre de groupes électrogènes 201 de l'ensemble 202 et $\Delta t$ est dans l'ensemble [1 ,t] avec t le nombre d'intervalles de temps $\Delta t$ de la période T.

$OnOff_g(\Delta t)$ = 1 quand l'état allumé est attribué au groupe électrogène 201 de rang g à l'intervalle de temps $\Delta t$ et inversement $OnOff_g(\Delta t)$ = 0 quand l'état éteint est attribué au groupe électrogène de rang g à l'intervalle de temps $\Delta t$.

Cette contrainte peut être écrite dans le problème d'optimisation pour déterminer les états allumés ou éteints $OnOff_g(\Delta t)$ et les puissances de fonctionnement $P_f(\Delta t)$ des groupes électrogènes 201 sous la forme suivante : la somme des variables binaires $OnOff_g(\Delta t)$ sur les intervalles de temps $\Delta t$ de la séquence de fonctionnement pour un groupe électrogène 201 auquel est attribué le rang g doit être supérieure ou égale à la somme des $OnOff_{g+1}(\Delta t)$ sur les intervalles de temps $\Delta t$ de la séquence de fonctionnement pour le groupe électrogène 201 d'ordre immédiatement supérieur g+1. Cette contrainte est appliquée jusqu'à ce que g valle n-1 et peut s'écrire :

$$\sum_{\Delta t} OnOff_g(\Delta t) \geq \sum_{\Delta t} OnOff_{g+1}(\Delta t) \quad \forall g \in [1, n-1]$$

D'un point de vue pratique, ceci signifie qu'un générateur de rang g sera au moins autant allumé sur l'ensemble de la période T, que le générateur de rang g+1, et donc à fortiori que tout générateur de rang postérieur au rang g. Plus un générateur sera de rang faible, et plus celui-ci sera fréquemment allumé comparé à un générateur de rang postérieur.

Alternativement, une contrainte plus stricte peut également être écrite sous la forme suivante : pour chaque intervalle de temps $\Delta t$ de la séquence de fonctionnement, la variable binaire $OnOff_g(\Delta t)$ pour un groupe électrogène 201 auquel est attribué le rang g doit être supérieure ou égale à la variable binaire $OnOff_{g+1}(\Delta t)$ pour le groupe électrogène 201 d'ordre immédiatement supérieur g+1. Cette contrainte plus stricte accélère les calculs tout en conservant la qualité des résultats obtenus. Cette contrainte est appliquée jusqu'à ce que g valle n-1 et peut s'écrire :

$$OnOff_g(\Delta t) \geq OnOff_{g+1}(\Delta t) \quad \forall g \in [1, n-1]$$

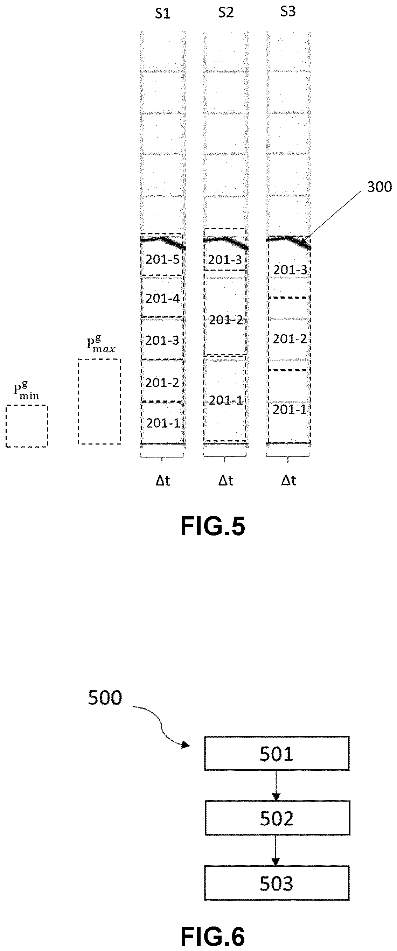

[Fig. 5] La figure 5 illustre trois scénarios pour la séquence de fonctionnement des groupes électrogènes 201 en faisant l'hypothèse que la période T comprend un unique intervalle de temps $\Delta t$, l'objectif étant de déterminer les états allumés ou éteints et les puissances de fonctionnement Pf des groupes électrogènes 201 pour fournir la puissance consommée sur l'intervalle de temps $\Delta t$ donnée par la courbe de charge 300 en minimisant le nombre d'allumages de groupes électrogènes 201 et en maximisant le rendement de chaque groupe électrogène 201 allumé, c'est-à-dire en minimisant la fonction de coût F précédemment décrite.

On se place dans l'hypothèse où tous les groupes électrogènes 201 sont identiques et ont pour puissance minimale $P_{min}^g$ et pour puissance maximale $P_{max}^g$ telles que représentées sur la figure 5.

Dans le scénario S1, on utilise au maximum des groupes électrogènes 201 avec une puissance de fonctionnement Pf égale à la puissance minimale $P_{min}^g$ de groupe électrogène 201.

Pour atteindre la courbe de charge 300 dans de telles conditions, il faut cinq groupes électrogènes 201-1, 201-2, 201-3, 201-4, 201-5 à la puissance minimale $P_{min}^g$ .

Dans le scénario S2, on utilise au maximum des groupes électrogènes 201 avec une puissance de fonctionnement Pf égale à la puissance maximale $P_{max}^g$ de groupe électrogène 201.

Pour atteindre la courbe de charge 300 dans de telles conditions, il faut deux groupes électrogènes 201-1, 201-2 à la puissance maximale $P_{max}^g$ et un groupe électrogène 201-3 à la puissance minimale $P_{min}^g$.

Dans le scénario S3, on utilise au maximum des groupes électrogènes 201 avec une puissance de fonctionnement Pf optimale maximisant le rendement des groupes électrogènes 201, par exemple environ 85% de la puissance maximale $P_{max}^g$.

Pour atteindre la courbe de charge 300 dans de telles conditions, il faut deux groupes électrogènes 201-1, 201-2 à la puissance optimale et un groupe électrogène 201-3 avec une puissance de fonctionnement environ égale à 75% de la puissance maximale $P_{max}^g$.

Si l'on compare les scénarios S1, S2 et S3, dans l'hypothèse d'une courbe de rendement similaire à la Fig. 5 :

- le coût d'allumage des groupes électrogènes 201 est plus élevé dans le scénario S1 que dans les scénarios S2 et S3 puisqu'on allume deux groupes électrogènes 201 de moins dans les scénarios S2 et S3 ;
- le coût de fonctionnement des groupes électrogènes 201 est plus élevé dans le scénario S1 que dans le scénario S2 puisque le rendement à la puissance maximale est meilleur que le rendement à la puissance minimale $P_{min}^g$ et le coût de fonctionnement des groupes électrogènes 201 est plus élevé dans le scénario S2 que dans le scénario S3 puisque le rendement à la puissance optimale ou à 75% de la puissance maximale $P_{max}^g$ est meilleur que le rendement à la puissance maximale $P_{max}^g$ ;

Ainsi, parmi les trois scénarios S1, S2 et S3, le scénario S3 est celui qui minimise la fonction de coût.

Dans le cas où le réseau 200 comporte plusieurs ensembles 202, le procédé 100 comporte par exemple une étape préalable consistant à ordonner les ensembles 202 de sorte que, plus les groupes électrogènes 201 d'un ensemble 202 fonctionnent avec des puissances élevées, plus l'ordre de l'ensemble 202 est bas.

Par exemple, si l'on prend l'exemple de la figure 2, l'ensemble 202-1 comportant des groupes électrogènes 201 fonctionnant avec des puissances supérieures aux groupes électrogènes 201 de l'ensemble 202-2 et l'ensemble 202-2 comportant des groupes électrogènes 201 fonctionnant avec des puissances supérieures aux groupes électrogènes 201 de l'ensemble 202-3, l'ordre 1 est attribué à l'ensemble 202-1, l'ordre 2 est attribué à l'ensemble 202-2 et l'ordre 3 est attribué à l'ensemble 202-3.

Une fois que les ensembles 202 du réseau électrique 200 sont ordonnés, les étapes 101 à 104 du procédé 100 sont réalisées par ordre croissant pour chaque ensemble 202 du réseau électrique 200 de manière que la courbe de charge prévisionnelle utilisée pour l'ensemble 202 d'ordre r prennent en compte l'énergie fournie par les groupes électrogènes 201 des ensembles 202 ayant un ordre inférieur à r.

Dans l'exemple de la figure 2, le procédé 100 est alors réalisé d'abord pour l'ensemble 202-1, puis pour l'ensemble 202-2, puis pour l'ensemble 202-3.

Pour l'ensemble 202-1, la courbe de charge prévisionnelle prend uniquement en compte l'énergie consommée sur le réseau électrique et éventuellement l'énergie fournie par des sources d'énergie autres que les groupes électrogènes 201. A l'issue du procédé 100 pour l'ensemble 202-1, la séquence de fonctionnement pour l'ensemble 202-1 est connue et l'on connaît donc l'énergie qui sera produite par les groupes électrogènes 201 de l'ensemble 202-1. Pour l'ensemble 202-2, la courbe de charge prévisionnelle prend également en compte l'énergie qui sera produite par les groupes électrogènes 201 de l'ensemble 202-1. Pour l'ensemble 202-3, la courbe de charge prévisionnelle prend en compte l'énergie qui sera produite par les groupes électrogènes 201 de l'ensemble 202-1 et l'énergie qui sera produite par les groupes électrogènes 201 de l'ensemble 202-2.

Dans le cas où la période T est de 24 heures et l'intervalle de temps Δt de 10 minutes :

- lorsque le réseau 200 comporte 13 groupes électrogènes 201, le procédé 100 détermine par programmation linéaire mixte intégrant la formulation du problème selon l'invention, la séquence de fonctionnement en moins de 10 secondes alors que l'approche par programmation linéaire mixte de l'art antérieur ne parvient pas à trouver de solution ;
- lorsque le réseau 200 comporte 6 groupes électrogènes 201, le procédé 100 détermine par programmation linéaire mixte intégrant la formulation du problème selon l'invention, la séquence de fonctionnement en moins de 5 secondes et l'approche par programmation linéaire mixte de l'art antérieur en 56 secondes ;
- lorsque le réseau 200 comporte 4 groupes électrogènes 201, le procédé 100 et l'approche par programmation linéaire mixte de l'art antérieur détermine la séquence de fonctionnement en moins de 5 secondes.

Ainsi, le procédé 100 selon le premier aspect de l'invention permet de déterminer une séquence de fonctionnement pour un réseau 200 comportant plus d'une dizaine de groupes électrogènes 201, plus rapidement ou aussi rapidement que l'approche de l'art antérieur.

Le procédé 100 est mis en œuvre par un ordinateur comportant un processeur.

Un deuxième aspect de l'invention concerne un procédé de mise œuvre sur le réseau électrique 200 de la séquence de fonctionnement déterminée par le procédé 100 selon le premier aspect de l'invention lors de la période T.

[Fig. 6] La figure 6 est un schéma synoptique représentant les étapes du procédé 500 selon le deuxième aspect de l'invention.

Les étapes du procédé 500 sont réalisées pour chaque intervalle de temps Δt de la période T.

Une première étape 501 consiste à allumer chaque groupe électrogène 201 éteint auquel est attribué l'état allumé dans la séquence de fonctionnement à l'intervalle de temps Δt, c'est-à-dire à allumer chaque groupe électrogène 201 auquel est affecté l'état allumé dans la séquence de fonctionnement à l'intervalle de temps Δt et l'état éteint dans la séquence de fonctionnement à l'intervalle de temps Δt précédant l'intervalle de temps Δt.

Une deuxième étape 502 consiste à éteindre chaque groupe électrogène 201 allumé auquel est attribué l'état éteint dans la séquence de fonctionnement à l'intervalle de temps Δt si le groupe électrogène 201 est allumé, c'est-à-dire à éteindre chaque groupe électrogène 201 auquel est affecté l'état éteint dans la séquence de fonctionnement à l'intervalle de temps Δt et l'état allumé dans la séquence de fonctionnement à l'intervalle de temps Δt précédant l'intervalle de temps Δt.

Une troisième étape 503 consiste à placer à la puissance de fonctionnement Pf déterminée, chaque groupe électrogène 201 auquel est attribué l'état allumé dans la séquence de fonctionnement à l'intervalle de temps Δt.

Les étapes du procédé 501 et 502 peuvent être réalisées dans n'importe quel ordre.

## Revendications

**1.** Procédé (100) mis en œuvre par ordinateur, de détermination d'une séquence de fonctionnement d'au moins un ensemble (202) de groupes électrogènes (201) d'un réseau électrique (200), les groupes électrogènes (201) de l'ensemble (202) étant identiques, la séquence de fonctionnement attribuant pour chaque intervalle de temps (Δt) d'une période donnée (T), un état éteint ou un état allumé à chaque groupe électrogène (201) et une puissance de fonctionnement (Pf) comprise entre une puissance minimale $\left(P_{min}^{g}\right)$ du groupe électrogène (201) et une puissance maximale $\left(P_{max}^{g}\right)$ du groupe électrogène (201) à chaque groupe électrogène auquel est attribué l'état allumé pour l'intervalle de temps (Δt), le procédé (100) étant **caractérisé en ce qu'**il comporte les étapes suivantes :

- Affecter un rang à chaque groupe électrogène (201, 101) ;
- A partir d'une courbe de charge prévisionnelle (300), déterminer un nombre minimal de groupes électrogènes $N_{min}$ (201) destinés à se voir attribuer l'état allumé sur la période (T, 102) ;
- Pour chaque groupe électrogène (201) ayant un rang inférieur ou égal au nombre minimal de groupes électrogènes $N_{min}$ (201), attribuer dans la séquence de fonctionnement l'état allumé au groupe électrogène (201) pour chaque intervalle de temps (Δt, 103) ;
- Pour chaque groupe électrogène (201) ayant un rang supérieur au nombre minimal de groupes électrogènes $N_{min}$ (201), attribuer, par rang croissant, pour chaque intervalle de temps (Δt) de la séquence de fonctionnement l'état allumé ou l'état éteint au groupe électrogène (201), et pour chaque groupe électrogène (201) auquel est affecté l'état allumé à un intervalle de temps (Δt) donné de la séquence de fonctionnement, attribuer une puissance de fonctionnement (Pf), par optimisation d'une fonction de coût sur la période (T) avec :

   ∘ une contrainte selon laquelle le nombre d'intervalles de temps (Δt) sur l'ensemble de la période (T) pour lesquels l'état allumé est attribué au groupe électrogène (201) est supérieur ou égal au nombre d'intervalles de temps (Δt) sur l'ensemble de la période (T) pour lesquels l'état allumé est attribué à chaque groupe électrogène (201) ayant un rang supérieur au groupe électrogène (201) ; ou
   ∘ une contrainte selon laquelle, pour chaque intervalle de temps (Δt) de la période (T), l'état allumé ne peut être attribué à un groupe électrogène (201) que si l'état allumé a été attribué à chaque groupe électrogène ayant un rang inférieur au groupe électrogène (201) ;
   le nombre minimal $N_{min}$ de groupes électrogènes (201) étant choisi tel que :

$$\left\lfloor \frac{P_{min}^c}{P_{max}^g} \right\rfloor + 1 \ \leq \ N_{min} \ \leq \ \left\lfloor \frac{P_{max}^c}{P_{min}^g} \right\rfloor$$

Avec : $P_{min}^c$ la puissance minimale de la courbe de charge prévisionnelle (300), $P_{max}^c$ la puissance maximale de la courbe de charge prévisionnelle (300), $P_{min}^g$ la puissance minimale du groupe électrogène (201), $P_{max}^g$ la puissance maximale du groupe électrogène (201) et $\lfloor \cdot \rfloor$ la partie entière.

2. Procédé (100) selon la revendication 1, **caractérisé en ce que** le rang d'un groupe électrogène (201) dépend de son nombre d'heures de fonctionnement et/ou de sa disponibilité.

3. Procédé (100) selon l'une quelconque des revendications précédentes, **caractérisé en ce que** le nombre minimal $N_{min}$ de groupes électrogènes (201) vaut :

$$N_{min} = \left\lfloor \frac{\alpha . P_{min}^c + \beta . P_{moy}^c}{P_{ref}^g} \right\rfloor$$

Avec : $P_{min}^c$ la puissance minimale de la courbe de charge prévisionnelle (300), $P_{moy}^c$ la puissance moyenne de la courbe de charge prévisionnelle (300), $P_{ref}^g$ une puissance de référence du groupe électrogène (201), $\alpha$ et $\beta$ des coefficients compris entre 0 et 1, notamment tels que la somme de $\alpha$ et $\beta$ valle 1 et $\lfloor \cdot \rfloor$ la partie entière.

4. Procédé (100) selon l'une quelconque des revendications 1 à 2, **caractérisé en ce que** le nombre minimal $N_{min}$ de groupes électrogènes (201) vaut :

$$N_{min} = \left\lfloor \frac{P_{min}^c}{P_{ref}^g} + 1 \right\rfloor$$

Avec : $P_{min}^c$ , la puissance minimale de la courbe de charge prévisionnelle (300), $P_{ref}^g$ une puissance de référence du groupe électrogène (201) et $\lfloor \cdot \rfloor$ la partie entière.

5. Procédé (100) selon l'une quelconque des revendications 3 ou 4, **caractérisé en ce que** la puissance de référence $P_{ref}^g$ du groupe électrogène (201) est égale à la puissance maximale $P_{max}^g$ du groupe électrogène (201) ou à une puissance optimale $P_{opt}^g$ du groupe électrogène (201).

6. Procédé (100) selon l'une quelconque des revendications précédentes, **caractérisé en ce que** la fonction de coût comprend la somme, pour chaque groupe électrogène (201), d'un coût d'allumage des groupes électrogènes (201) et d'un coût de fonctionnement des groupes électrogènes (201) sur la période (T).

7. Procédé (100) selon la revendication 5 et 6, **caractérisé en ce que** le coût de fonctionnement d'un groupe électrogène (201) dépend d'une courbe de rendement (400) du groupe électrogène (201) donnant le rendement (R) du groupe électrogène (201) en fonction de sa puissance de fonctionnement (Pf), la puissance optimale $P_{opt}^g$ du groupe électrogène (201) correspondant au maximum de la courbe de rendement (400).

8. Procédé (100) selon l'une quelconque des revendications précédentes, **caractérisé en ce que** le réseau électrique (200) comporte plusieurs ensembles (202) de groupes électrogènes (201) identiques, le procédé (100) comportant une étape préalable d'ordonnancement des ensembles (202) de groupes électrogènes (201) par puissance maximale $\left(P_{max}^g\right)$ des groupes électrogènes (201) de l'ensemble (202) décroissante, les étapes (101 à 104) du procédé (100) étant réalisées pour chaque ensemble (202) par ordre croissant, la courbe de charge prévisionnelle pour l'ensemble (202) prenant en compte la consommation d'énergie sur le réseau électrique (200) et l'énergie fournie par chaque ensemble (202) ayant un ordre inférieur à l'ensemble (202) .

9. Procédé (100) selon la revendication 8, **caractérisé en ce que** la courbe de charge prévisionnelle (300) prend en compte en outre l'énergie produite par des sources d'énergie autres que les groupes électrogènes (201) dans le réseau électrique (200).

10. Procédé (100) selon la revendication 9, **caractérisé en ce que** les autres sources d'énergie sont au moins un dispositif photovoltaïque et/ou au moins un dispositif éolien et/ou au moins une batterie.

11. Procédé (500) de mise œuvre sur le réseau électrique (200), de la séquence de fonctionnement déterminée par le procédé (100) selon l'une quelconque des revendications précédentes lors de la période (T), **caractérisé en ce qu'**il comporte les étapes suivantes :

- A chaque intervalle de temps ($\Delta$t):

o Allumer chaque groupe électrogène (201) éteint auquel est attribué l'état allumé dans la séquence de fonctionnement à l'intervalle de temps ($\Delta$t, 501) ;
∘ Eteindre chaque groupe électrogène (201) allumé auquel est attribué l'état éteint dans la séquence de fonctionnement à l'intervalle de temps ($\Delta$t) si le groupe électrogène (201) est allumé (502) ;
∘ Placer à la puissance de fonctionnement (Pf) correspondante, chaque groupe électrogène (201) auquel est attribué l'état allumé dans la séquence de fonctionnement à l'intervalle de temps ($\Delta$t, 503).

12. Produit-programme d'ordinateur comprenant des instructions qui, lorsque le programme est exécuté par un ordinateur, conduisent celui-ci à mettre en œuvre les étapes du procédé selon l'une quelconque des revendications 1 à 10.

**Patentansprüche**

1. Per Computer umgesetztes Verfahren (100) zur Bestimmung einer Betriebssequenz wenigstens einer Gruppe (202) aus Stromaggregaten (201) eines Stromnetzes (200), wobei die Stromaggregate (201) der Gruppe (202) identisch sind, wobei die Betriebssequenz für jedes Zeitintervall ($\Delta$t) einer bestimmten Periode (T) einen ausgeschalteten Zustand oder einen in jedem Stromaggregat (201) eingeschalteten Zustand und eine Betriebsleistung (Pf), die zwischen einer Mindestleistung $\left(P_{min}^g\right)$ des Stromaggregats (201) und einer Höchstleistung $\left(P_{max}^g\right)$ des Stromaggregats (201) in jedem Stromaggregat inbegriffen ist, dem der eingeschaltete Zustand für das Zeitintervall ($\Delta$t) zugeteilt wird, zuteilt, wobei das Verfahren (100) **dadurch gekennzeichnet ist, dass** es die folgenden Schritte umfasst:

- Jedem Stromaggregat (201, 101) einen Rang zuordnen;
- Ausgehend von einer voraussichtlichen Lastkurve (300) eine Mindestanzahl von Stromaggregaten $N_{min}$ (201) bestimmen, denen der eingeschaltete Zustand über die Periode (T, 102) zugeordnet werden soll;
- Für jedes Stromaggregat (210) mit einem niedrigerem oder einem Rang gleich der Mindestanzahl von Stromaggregaten $N_{min}$ (201) in der Betriebssequenz den eingeschalteten Zustand des Stromaggregats (201) für jedes Zeitintervall ($\Delta$t, 103) zuordnen;
- Für jedes Stromaggregat (201) mit einem höheren Rang als der Mindestanzahl von Stromaggregaten $N_{min}$ (201) per ansteigendem Rang für jedes Zeitintervall ($\Delta$t) der Betriebssequenz den eingeschalteten Zustand oder den ausgeschalteten Zustand des Stromaggregats (201) zuordnen und für jedes Stromaggregat (201), dem der eingeschaltete Zustand in einem bestimmten Zeitintervall ($\Delta$t) der Betriebssequenz zugeordnet wird, eine Betriebsleistung (Pf) per Optimierung einer Kostenfunktion über den Zeitraum (T) zuordnen mit:

○ einer Vorgabe, gemäß der die Anzahl von Zeitintervallen ($\Delta$t) über die Gruppe der Periode (T), für die der eingeschaltete Zustand dem Stromaggregat (201) zugeordnet wird, größer oder gleich der Anzahl von Zeitintervallen ($\Delta$t) über die Gruppe der Periode (T) ist, für die der eingeschaltete Zustand dieses Stromaggregats (201) mit einem höheren Rang des Stromaggregats (201) zugeordnet wird; oder

○ einer Vorgabe, nach der der eingeschaltete Zustand für jedes Zeitintervall ($\Delta$t) der Periode (T) nur dann einem Stromaggregat (201) zugeordnet werden kann, wenn der eingeschaltete Zustand jedem Stromaggregat mit einem niedrigeren Rang des Stromaggregats (201) zugeordnet wurde;

wobei die Mindestanzahl $N_{min}$ von Stromaggregaten (201) derart ausgewählt wird, dass;

$$\left\lfloor \frac{P^c_{min}}{P^g_{max}} \right\rfloor + 1 \le N_{min} \le \left\lfloor \frac{P^c_{max}}{P^g_{min}} \right\rfloor$$

Wobei: $P^c_{min}$ die Mindestleistung der voraussichtlichen Lastkurve (300) ist, $P^c_{max}$ die Höchstleistung der voraussichtlichen Lastkurve (300) ist, $P^g_{min}$ die Mindestleistung des Stromaggregats (201) ist, $P^g_{max}$ die Höchstleistung des Stromaggregats (201) ist und [.] das gesamte Teil ist.

2. Verfahren (100) gemäß Anspruch 1, **dadurch gekennzeichnet, dass** der Rang eines Stromaggregats (201) von seiner Anzahl an Betriebsstunden und/oder seiner Verfügbarkeit abhängt.

3. Verfahren (100) gemäß irgendeinem der voranstehenden Ansprüche, **dadurch gekennzeichnet, dass** die Mindestanzahl $N_{min}$ vom Stromaggregaten (201) wert ist:

$$N_{min} = \left\lfloor \frac{\alpha . P^c_{min} + \beta . P^c_{moy}}{P^g_{ref}} \right\rfloor$$

Wobei: $P^c_{min}$ die Mindestleistung der voraussichtlichen Lastkurve (300) ist, $P^c_{moy}$ die Durchschnittsleistung der voraussichtlichen Lastkurve (300) ist, $P^g_{ref}$ die Referenzleistung des Stromaggregats (201) ist, $\alpha$ und $\beta$ Koeffizienten sind, die zwischen 0 und 1 insbesondere derart inbegriffen sind, dass die Summe von $\alpha$ und $\beta$ 1 wert ist und [.] das gesamte Teil ist.

4. Verfahren (100) gemäß irgendeinem der Ansprüche 1 und 2, **dadurch gekennzeichnet, dass** die Mindestanzahl Nim von Stromaggregaten (201) wert ist:

$$N_{min} = \left\lfloor \frac{P^c_{min}}{P^g_{ref}} + 1 \right\rfloor$$

Wobei: $P^c_{min}$ die Mindestleistung der voraussichtlichen Lastkurve (300) ist, $P^g_{ref}$ eine Referenzleistung des Stromaggregats (201) ist, und [.] das gesamte Teil ist.

5. Verfahren (100) gemäß irgendeinem der Ansprüche 3 oder 4, **dadurch gekennzeichnet, dass** die Referenzleistung $P^g_{ref}$ des Stromaggregats (201) gleich der Höchstleistung $P^g_{max}$ des Stromaggregats (201) oder einer optimalen Leistung $P^g_{opt}$ des Stromaggregats (201) ist.

6. Verfahren (100) gemäß irgendeinem der voranstehenden Ansprüche, **dadurch gekennzeichnet, dass** die Kostenfunktion für jedes Stromaggregat (201) die Summe der Einschaltkosten des Stromaggregate (201) und der Betriebskosten der Stromaggregate (201) über die Periode (T) umfasst.

7. Verfahren (100) gemäß Anspruch 5 und 6, **dadurch gekennzeichnet, dass** die Betriebskosten eines Stromaggregats (201) von einer Rentabilitätskurve (400) des Stromaggregats (201) abhängen, die die Rentabilität (R) des Stromaggregats (201) in Abhängigkeit von seiner Betriebsleistung (Pf) angibt, wobei die optimale Leistung $P^g_{opt}$ des Stromaggregats (201) dem Maximum der Rentabilitätskurve (400) entspricht.

8. Verfahren (100) gemäß irgendeinem der voranstehenden Ansprüche, **dadurch gekennzeichnet, dass** das Stromnetz (200) mehrere Gruppen (202) von identischen Stromaggregaten (201) umfasst, wobei das Verfahren (100) einen vorherigen Fertigungssteuerungsschritt der Gruppen (202) von Stromaggregaten (201) nach Höchstleistung $P^g_{max}$ der Stromaggregate (210) der Gruppe (202) in absteigender Reihenfolge umfasst, wobei die Schritte (101 bis 104) des Verfahrens (101) für jede Gruppe (202) in aufsteigender Reihenfolge ausgeführt wird, wobei die voraussichtliche Lastkurve für jede Gruppe (202) den Energieverbrauch im Stromnetz (200) berücksichtigt und die von jeder Gruppe (202) gelieferte Energie einen niedrigeren Rang als die Gruppe (202) aufweist.

9. Verfahren (100) gemäß Anspruch 8, **dadurch gekennzeichnet, dass** die voraussichtliche Lastkurve (300) darüber hinaus die Energie berücksichtigt, die von anderen Energiequellen als den Stromaggregaten (201) im Stromnetz (200) erzeugt wird.

10. Verfahren (100) gemäß Anspruch 9, **dadurch gekennzeichnet, dass** die anderen Energiequellen wenigstens eine photovoltaische Vorrichtung und/oder wenigstens eine äolische Vorrichtung und/oder wenigstens eine Batterie sind.

11. Verfahren (500) zum Umsetzen der Betriebssequenz, die vom Verfahren (100) gemäß irgendeinem der voranstehenden Ansprüche während der Periode (T) bestimmt wird, auf dem Stromnetz, **dadurch gekennzeichnet, dass** es die folgenden Schritte umfasst:

   - Bei jedem Zeitintervall (∆t):

      ◦ Einschalten jedes ausgeschalteten Stromaggregats (201), dem der eingeschaltete Zustand in der Betriebssequenz im Zeitintervall (∆t, 501) zugeordnet wird;
      ◦ Ausschalten jedes eingeschalteten Stromaggregats (201), dem der ausgeschaltete Zustand in der Betriebssequenz im Zeitintervall (∆t, 501) zugeordnet wird, wenn das Stromaggregat eingeschaltet wird (502);
      ◦ Einstellen jedes Stromaggregats (201), dem der eingeschaltete Zustand in der Betriebssequenz im Zeitintervall (∆t, 503) zugeordnet wird, auf die entsprechende Betriebsleistung (201).

12. Computerprogramm-Produkt, umfassend Anweisungen, die, wenn das Programm von einem Computer ausgeführt ist, diesen dazu veranlassen, die Schritte des Verfahrens gemäß irgendeinem der Ansprüche 1 bis 10 umzusetzen.

**Claims**

1. Method (100) implemented by computer, for determining a sequence of operation of at least one set (202) of generator units (201) of an electrical network (200), the generator units (201) of the set (202) being identical, the sequence of operation allocating for each time interval (∆t) of a given period (T), an off state or an on state to each generator unit (201) and an operating power (Pf) comprised between a minimum power $\left(P^g_{min}\right)$ of the generator unit (201) and a maximum power $\left(P^g_{max}\right)$ of the generator unit (201) to each generator unit to which is allocated the on state for the time interval (∆t), the method (100) being **characterised in that** it comprises the following steps:

   - Assigning a rank to each generator unit (201, 101);
   - From a projected load curve (300), determining a minimum number of generator units $N_{min}$ (201) destined to be allocated the on state over the period (T, 102);
   - For each generator unit (201) having a rank less than or equal to the minimum number of generator units $N_{min}$ (201), allocating in the sequence of operation the on state to the generator unit (201) for each time interval (∆t, 103);

- For each generator unit (201) having a rank greater than the minimum number of generator units $N_{min}$ (201), allocating, by increasing rank, for each time interval ($\Delta t$) of the sequence of operation the on state or the off state to the generator unit (201), and for each generator unit (201) to which is assigned the on state at a given time interval ($\Delta t$) of the sequence of operation, allocating an operating power (Pf), by optimisation of a cost function over the period (T) with:

  ∘ a constraint according to which the number of time intervals ($\Delta t$) over the whole of the period (T) for which the on state is allocated to the generator unit (201) is greater than or equal to the number of time intervals ($\Delta t$) over the whole of the period (T) for which the on state is allocated to each generator unit (201) having a rank greater than the generator unit (201); or
  ∘ a constraint according to which, for each time interval ($\Delta t$) of the period (T), the on state can only be allocated to a generator unit (201) if the on state has been allocated to each generator unit having a rank less than the generator unit (201);

  the minimum number $N_{min}$ of generator units (201) being chosen such that:

$$\left\lfloor \frac{P_{min}^c}{P_{max}^g} \right\rfloor + 1 \leq N_{min} \leq \left\lfloor \frac{P_{max}^c}{P_{min}^g} \right\rfloor$$

With: $P_{min}^c$ the minimum power of the projected load curve (300), $P_{max}^c$ the maximum power of the projected load curve (300), $P_{min}^g$ the minimum power of the generator unit (201), $P_{max}^g$ the maximum power of the generator unit (201) and [. J the integer part.

2. Method (100) according to claim 1, **characterised in that** the rank of a generator unit (201) depends on its number of operating hours and/or on its availability.

3. Method (100) according to any one of the preceding claims, **characterised in that** the minimum number $N_{min}$ of generator units (201) is equal to:

$$N_{min} = \left\lfloor \frac{\alpha . P_{min}^c + \beta . P_{av}^c}{P_{ref}^g} \right\rfloor$$

With: $P_{min}^c$ the minimum power of the projected load curve (300), $P_{av}^c$ the average power of the projected load curve (300), $P_{ref}^g$ a reference power of the generator unit (201), $\alpha$ and $\beta$ coefficients comprised between 0 and 1, notably such that the sum of $\alpha$ and $\beta$ is equal to 1 and $\lfloor . \rfloor$ the integer part.

4. Method (100) according to any one of claims 1 to 2, **characterised in that** the minimum number $N_{min}$ of generator units (201) is equal to:

$$N_{min} = \left\lfloor \frac{P_{min}^c}{P_{ref}^g} + 1 \right\rfloor$$

With: $P_{min}^c$ the minimum power of the projected load curve (300), $P_{ref}^g$ a reference power of the generator unit (201) and $\lfloor . \rfloor$ the integer part.

5. Method (100) according to any one of claims 3 or 4, **characterised in that** the reference power $P_{ref}^g$ of the generator unit (201) is equal to the maximum power $P_{max}^{g}$ of the generator unit (201) or to an optimum power $P_{opt}^{g}$ of the generator unit (201).

6.  Method (100) according to any one of the preceding claims, **characterised in that** the cost function comprises the sum, for each generator unit (201), of a start-up cost of the generator units (201) and an operating cost of the generator units (201) over the period (T).

7.  Method (100) according to claim 5 and 6, **characterised in that** the operating cost of a generator unit (201) depends on an efficiency curve (400) of the generator unit (201) giving the efficiency (R) of the generator unit (201) as a function of its operating power (Pf), the optimum power $P_{opt}^{g}$ of the generator unit (201) corresponding to the maximum of the efficiency curve (400).

8.  Method (100) according to any one of the preceding claims, **characterised in that** the electrical network (200) comprises several sets (202) of identical generator units (201), the method (100) comprising a prior step of scheduling the sets (202) of generator units (201) by decreasing maximum power $\left( P_{max}^{g} \right)$ of the generator units (201) of the set (202), the steps (101 to 104) of the method (100) being carried out for each set (202) by increasing order, the projected load curve for the set (202) taking into account the energy consumption on the electrical network (200) and the energy supplied by each set (202) having an order less than the set (202).

9.  Method (100) according to claim 8, **characterised in that** the projected load curve (300) further takes into account the energy produced by energy sources other than the generator units (201) in the electrical network (200).

10. Method (100) according to claim 9, **characterised in that** the other energy sources are at least one photovoltaic device and/or at least one wind powered device and/or at least one battery.

11. Method (500) for implementing, on the electrical network (200), the sequence of operation determined by the method (100) according to any one of the preceding claims during the period (T), **characterised in that** it comprises the following steps:

    - At each time interval (Δt):

        ∘ Starting up each off generator unit (201) to which is allocated the on state in the sequence of operation at the time interval (Δt, 501);
        ∘ Shutting down each on generator unit (201) to which is allocated the off state in the sequence of operation at the time interval (Δt) if the generator unit (201) is on (502);
        ∘ Placing at the corresponding operating power (Pf), each generator unit (201) to which is allocated the on state in the sequence of operation at the time interval (Δt, 503).

12. Computer programme product comprising instructions which, when the programme is executed by a computer, lead it to implement the steps of the method according to any one of claims 1 to 10.

**FIG.1**

**FIG.2**

**FIG.3**

**FIG.4**

S1    S2    S3

300

201-5    201-3    201-3

201-4    201-2    201-2

$P^g_{max}$    201-3

201-2    201-2    201-1

$P^g_{min}$    201-1    201-1

Δt    Δt    Δt

**FIG.5**

500

501

502

503

**FIG.6**

**EP 3 840 163 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2010035321 A
- JP S62131725 A
- JP 2009189226 A
- WO 2016102675 A1

**Littérature non-brevet citée dans la description**

- **MORALES-ESPANA, GERMAN ; JESUS M. LATORRE ; ANDRES RAMOS.** Tight and Compact MILP Formulation of Start-Up and Shut-Down Ramping in Unit Commitment. *IEEE Transactions on Power Systems,* Mai 2013, vol. 28 (2), 1288-96